# EUROPÄISCHE PATENTSCHRIFT

(11) **EP 0 525 120 B1**
(45) Veröffentlichungstag und Bekanntmachung des Hinweises auf die Patenterteilung: **25.05.1994**
(21) Anmeldenummer: 91910466.1
(22) Anmeldetag: 11.06.1991
(51) Int. Cl.: F02P 5/15

(54) **VERFAHREN ZUM STEUERN DER DREHZAHL EINER BRENNKRAFTMASCHINE NACH DEM START**
PROCESS FOR CONTROLLING THE SPEED OF AN INTERNAL COMBUSTION ENGINE AFTER STARTING
PROCEDE POUR LA COMMANDE DU REGIME D'UN MOTEUR A COMBUSTION INTERNE APRES LE DEMARRAGE

(30) Priorität: 12.06.1990 EP 90111112
(43) Veröffentlichungstag der Anmeldung: 03.02.1993
(73) Patentinhaber: SIEMENS AKTIENGESELLSCHAFT, 80333 München (DE)
(72) Erfinder: WEBER, Gerald, Dipl.-Ing., D-8411 Sinzing (DE); KREBS, Stefan, Dr. Dipl.-Ing., D-8400 Regensburg (DE)
(86) Internationale Anmeldenummer: EP9101084
(87) Internationale Veröffentlichungsnummer: WO9119901

(56) Entgegenhaltungen:
- EP-A- 0 051 723
- DE-A- 3 924 756
- FR-A- 2 427 477
- FR-A- 2 454 526
- FR-A- 2 454 532
- FR-A- 2 454 535
- FR-A- 2 477 642
- FR-A- 2 612 256
- US-A- 4 351 297
- US-A- 4 399 789
- US-A- 4 570 596
- US-A- 4 633 834

## Beschreibung

Die Erfindung betrifft ein Verfahren zum Steuern der Drehzahl einer Brennkraftmaschine nach dem Start gemäß Oberbegriff von Anspruch 1.

Der Startvorgang ist beendet, wenn die Maschine vom Anlasser getrennt aus eigener Kraft weiterläuft und eine bestimmte Mindestdrehzahl erreicht hat. Danach beginnt die sogenannte Nachstartphase, während der der Motor auf seine vorgegebene Leerlaufdrehzahl hochläuft. Diese Leerlaufdrehzahl wird bei modernen Motorsteuerungen meist über eine Leerlaufdrehzahlregelung eingeregelt.

Während dieser Nachstartphase liegt noch kein stabiler Betriebszustand vor. Die Drehzahl steigt üblicherweise sehr schnell innerhalb von ungefähr 0,3 bis 1 Sekunde von etwa 200 Umdrehungen pro Minute nach dem Start auf die temperaturabhängige Leerlaufdrehzahl von ungefähr 600 Umdrehungen pro Minute bei etwa 20° C an. Eine leicht angefettete Gemischeinstellung und frühe Zündwinkelwerte sind dabei üblicherweise vorgesehen, um ein sicheres Hochlaufen zu gewährleisten.

Der rasche Drehzahlanstieg bewirkt aber auch, daß die Drehzahl erst über die vorgegebene Leerlaufdrehzahl hinaus ansteigt und erst dann von der Leerlaufdrehzahlregelung auf die Leerlaufdrehzahl zurückgeregelt wird. Durch dieses Überschwingen der Drehzahl über die Leerlaufdrehzahl entstehen erhöhte Abgasemissionen, die ohnedies durch die fette Gemischeinstellung und daher noch nicht mögliche Lambda-Regelung während des Nachstarts bereits erhöht sind.

Der Erfindung liegt daher die Aufgabe zugrunde dieses Uberschwingen mit den damit verbundenen höheren Abgasemissionen zu vermeiden, ohne dabei das sichere Hochlaufen des Motors zu beeinträchtigen.

Die erfindungsgemäße Lösung ist in Anspruch 1 gekennzeichnet. Vorteilhafte Weiterbildungen der Erfindung finden sich in den Unteransprüchen.

Die Erfindung geht aus von der Erkenntnis, daß das Maß des Überschwingens abhängig ist von der Änderungsgeschwindigkeit der Drehzahl, also der Beschleunigung während der Startphase. Es muß also umso stärker eingegriffen werden, umso höher diese Änderungsgeschwindigkeit der Drehzahl ist. Jeder solche Eingriff bewirkt aber zwangsläufig eine Verschlechterung des Motorlaufs, da in irgendeiner Form eine Leistungsbegrenzung erfolgen muß, obwohl gerade beim Nachstart diese Leistung für einen sicheren Motorbetrieb nötig ist. Erfindungsgemäß wird daher die Leistung erst ab einer bestimmten Drehzahlschwelle reduziert. Diese Drehzahlschwelle wird bei Fahrversuchen für jeden Motortyp individuell bestimmt, so daß einerseits der Motor nicht mehr abstirbt und andererseits das Überschwingen der Drehzahl noch vermieden werden kann. Der Eingriff besteht darin, daß ab dieser Drehzahlschwelle der Zündwinkel abhängig von der Änderungsgeschwindigkeit der Drehzahl abrupt in Richtung Spät verstellt wird und erst nach Ablauf einer bestimmten Zeitspanne wieder auf den für die Leerlaufdrehzahl normalen Zündwinkel zurückgeregelt wird. Die Zeitspanne und die Rückregelfunktion sind dabei ebenfalls durch Startversuche so optimiert, daß sich eine möglichst kurze Einregelzeit auf die Leerlaufdrehzahl ergibt.

Gemäß einer vorteilhaften Weiterbildung der Erfindung ist die Drehzahlschwelle von der temperaturabhängigen Leerlaufdrehzahl abhängig. Dies deshalb, da bei tiefen Temperaturen auch die Drehzahlschwelle, die noch ein sicheres Weiterlaufen des Motors trotz Leistungsbegrenzung ermöglicht entsprechend höher liegt als bei höheren Temperaturen.

Die Rückregelfunktion für den späten Zündwinkel zurück auf den normalen Zündwinkel kann beliebig, vozugsweise linear oder progressiv sein. Damit wird ein Ruck vermieden, der bei einer abrupten Änderung des Zündwinkels auftreten würde.

Falls der Fahrer bereits während der Nachstartphase Gas gibt, also der Leerlaufdrehzahlregelbereich verlassen wird, wird auch die Spätstellung des Zündwinkels sofort beendet, da dann die volle Leistung des Motors gebraucht wird.

Die Erfindung wird anhand der Figuren näher erläutert. Dabei zeigen:
- Figur 1: ein vereinfachtes Blockschaltbild einer Brennkraftmaschine mit einer Motorsteuerung zur Durchführung des erfindungsgemäßen Verfahrens und
- Figur 2, 3: ein Drehzahlzeitdiagramm bzw. ein Zündwinkelzeitdiagramm zur Erläuterung des Verfahrens.

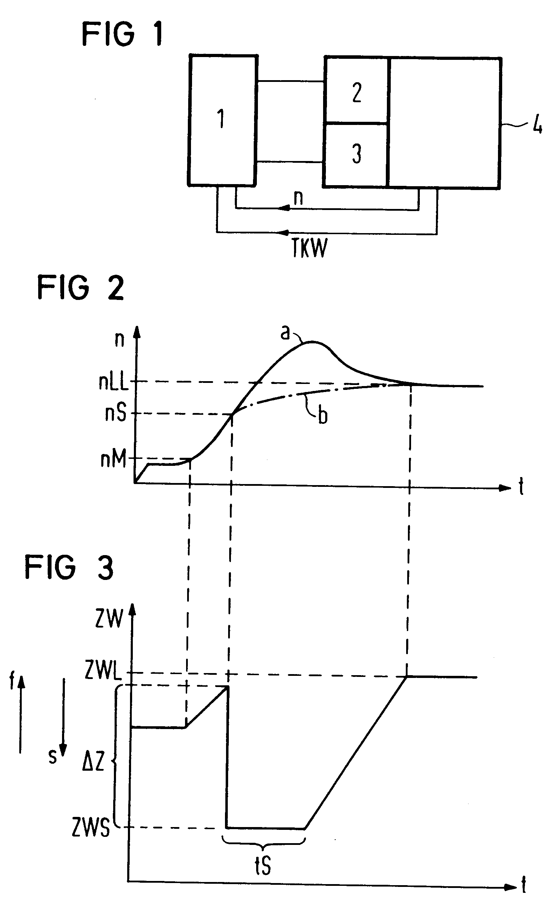

In Figur 1 ist mit 1 eine Motorsteuerung bezeichnet. Die Motorsteuerung 1 ist ein übliches Mikrocomputersystem mit entsprechenden Eingangs- und Ausgangsschnittstellen. Zur Durchführung des erfindungsgemäßen Verfahrens erhält sie als Eingangsgrößen von entsprechenden Sensoren die Drehzahl n und die Kühlwassertemperatur TKW einer Brennkraftmaschine 4.

Über ihre Ausgangsschnittstellen steuert die Motorsteuerung 1 ein Zündsystem 2 und einen Leerlauffüllungssteller 3.

Über den Leerlauffüllungssteller 3 führt die Motorsteuerung 1 eine Leerlaufdrehzahlregelung durch. Der Istwert ist dabei die an der Brennkraftmaschine 4 gemessene Drehzahl n. Der einzuregelnde Sollwert ist abhängig von der Betriebstemperatur. Diese Betriebstemperatur wird indirekt über die Kühlwassertemperatur TKW gemessen. Die Abhängigkeit der Leerlaufdrehzahl nLL von der Kühlwassertemperatur TKW ist in einem Kennfeld der Motorsteuerung 1 in einem Festwertspeicher abgelegt.

Im Diagramm der Figur 2 ist die Drehzahl n über der Zeit t beginnend mit dem Startvorgang einer Brennkraftmaschine dargestellt. Beim Starten der Brennkraftmaschine wird diese zuerst vom Anlasser durchgedreht. Nach Einsetzen des selbständigen Motorlaufs und bei Erreichen einer Mindestdrehzahl nM ist der Start beendet und es folgt die Nachstartphase.

Während dieser Nachstartphase läuft die Brennkraftmaschine auf ihre übliche Leerlaufdrehzahl nLL hoch. Die Änderungsgeschwindigkeit der Drehzahl ist dabei abhängig von den Umgebungsbedingungen, insbesondere der Temperatur. Nach Überschreiten der Leerlaufdrehzahl nLL greift die Leerlaufdrehzahlregelung ein, um die Drehzahl durch entsprechende Ansteuerung des Leerlauffüllungsstellers 3 auf die Leerlaufdrehzahl nLL einzuregeln.

Dies ist in Figur 2 anhand der Kurve a dargestellt. Das Ausmaß des dabei auftretenden Überschwingens des Drehzahlverlaufs über die Leerlaufdrehzahl nLL ist abhängig von der Höhe der Änderungsgeschwindigkeit.

Zur Vermeidung dieses Überschwingens wird der Zündwinkel ZW ab einer Drehzahlschwelle nS in Richtung Spät verstellt. In Figur 3 ist der Zündwinkel ZW über der Zeit t aufgetragen. Während des Starts ist der Zündwinkel ZW konstant und wird dann während der Nachstartphase mit zunehmender Drehzahl n kontinuierlich in Richtung Früh verstellt. Beim Erreichen der Drehzahlschwelle nS folgt eine abrupte Verstellung in Richtung Spät. Dieser neue spätere Zündwinkel ZWS wird während einer Zeitspanne tS beibehalten und dann wieder auf den normalen Leerlaufzündwinkel ZWL zurückgeregelt.

Durch die Spät-Verstellung bei der Drehzahlschwelle nS wird die Leistung der Brennkraftmaschine reduziert, so daß der Drehzahlverlauf abflacht gemäß der in Figur 2 mit b bezeichneten Kurve. Die Zeitspanne tS für die Beibehaltung des späteren Zündwinkels ZWS und die lineare Rückregelfunktion auf den Leerlaufzündwinkel ZWL sind durch Startversuche ermittelt und so gewählt, daß die Leerlaufdrehzahl nLL möglichst schnell und ruckfrei erreicht wird. Für den ruckfreien Übergang kann die Abregelfunktion je nach Brennkraftmaschine auch progressiv oder speziell angepaßt sein.

Die Drehzahlschwelle nS, an der der Eingriff erfolgt, ist abhängig von der Leerlaufdrehzahl nLL. Diese Leerlaufdrehzahl nLL ist auch bei Vergasermotoren temperaturabhängig und wird bei Brennkraftmaschinen mit Leerlaufdrehzahlregelung abhängig von der Kühlwassertemperatur TKW einem Kennfeld entnommen. Da die Drehzahlschwelle nS auf diese temperaturabhängig variable Leerlaufdrehzahl nLL bezogen ist, erfolgt der Zündwinkeleingriff also ebenfalls temperaturabhängig variabel bei verschiedenen Drehzahlen n. Dadurch wird für jede Kühlwassertemperatur TKW gewährleistet, daß die Brennkraftmaschine einerseits sicher weiterläuft und andererseits ein Überschwingen vermieden wird.

Die Größe der Zündwinkeländerung Δ Z ist abhängig von der Änderungsgeschwindigkeit der Drehzahl. Bei entsprechend steilem Anstieg des Drehzahlverlaufs und damit der Änderungsgeschwindigkeit ist die Zündwinkeländerung Δ Z entsprechend groß, um genug Leistung zu reduzieren. Andererseits ist bei einem extrem langsamen Anstieg des Drehzahlverlaufs eventuell gar keine Zündwinkeländerung mehr nötig. Die Größe der Zündwinkeländerung in Abhängigkeit von der Änderungsgeschwindigkeit der Drehzahl ist wiederum in einem Kennfeld abgelegt.

Für eine bestimmte Brennkraftmaschine wurden für diese Zündwinkeländerung Δ Z Werte von 0° bis 15° in Richtung Spät ermittelt. Die Drehzahlschwelle nS lag bei 300 Umdrehungen pro Minute unterhalb der Leerlaufdrehzahl nLL. Die Zeitspanne tS wurde so gewählt, daß der konstante späte Zündwinkel für zwei bis drei Zündungen beibehalten wurde. Die Inkremente für die lineare Rückregelfunktion waren so ausgelegt, daß die Rückregelung nach ungefähr fünf Zündungen beendet war.

Der Eingriff ist beendet wenn der normale Leerlaufzündwinkel ZWL wieder erreicht ist. Außerdem wird der Eingriff jederzeit beendet, wenn der Leerlaufdrehzahlregelbereich verlassen wird. Dies ist der Fall wenn der Fahrer Gas gibt und damit die volle Leistung der Brennkraftmaschine gebraucht wird.

## Patentansprüche

1. Verfahren zum Steuern der Drehzahl einer Brennkraftmaschine nach dem Start bis zum Erreichen der Leerlaufdrehzahl (nLL), bei dem die Drehzahl (n) der Brennkraftmaschine laufend erfaßt wird, wobei die Leerlaufdrehzahl (nLL) abhängig von der Kühlwassertemperatur (TKW) ist,
**dadurch gekennzeichnet,**
daß ab einer bestimmten Drehzahlschwelle (nS) der Zündwinkel (ZW) abhängig von der Änderungsgeschwindigkeit der Drehzahl (n) für eine bestimmte Zeitspanne (tS) in Richtung Spät verstellt wird und daß nach Ablauf dieser Zeitspanne (tS) der Zündwinkel (ZW) auf den Normalzündwinkel nach einer vorbestimmten Funktion zurückgeregelt wird.

2. Verfahren nach Anspruch 1,
**dadurch gekennzeichnet,**
daß eine Leerlaufdrehzahlregelung vorgesehen ist, die die Drehzahl (n) auf die Leerlaufdrehzahl (nLL) einregelt.

3. Verfahren nach Anspruch 2,
**dadurch gekennzeichnet,**
daß die Drehzahlschwelle (nS) abhängig von der Leerlaufdrehzahl (nLL) ist.

4. Verfahren nach Anspruch 2,
**dadurch gekennzeichnet,**
daß die Rückregelfunktion linear ist.

5. Verfahren nach Anspruch 2,
**dadurch gekennzeichnet**,
daß die Rückregelfunktion progressiv ist.

6. Verfahren nach einem der vorhergehenden Ansprüche,
**dadurch gekennzeichnet,**
daß eine noch bestehende Spätstellung des Zündwinkels (ZW) rückgängig gemacht wird, wenn der Betriebszustand Leerlauf verlassen wird.

## Claims

1. Process for controlling the speed of an internal combustion engine after starting until reaching the idling speed (nLL), in which the speed (n) of the internal combustion engine is continuously detected, the idling speed (nLL) being dependent on the cooling water temperature (TKW), characterized in that, starting from a specific engine speed threshold (nS), the ignition angle (ZW) is adjusted in the retarded direction as a function of the rate of variation of the speed (n) for a specific time period (tS), and in that after this time period (tS) has elapsed the ignition angle (ZW) is controlled back to the normal ignition angle in accordance with a predetermined function.

2. Process according to Claim 1, characterized in that an idling speed control is provided which adjusts the engine speed (n) to the idling speed (nLL).

3. Process according to Claim 2, characterized in that the engine speed threshold (nS) is dependent on the idling speed (nLL).

4. Process according to Claim 2, characterized in that the return control function is linear.

5. Process according to Claim 2, characterized in that the return control function is progressive.

6. Process according to one of the preceding claims, characterized in that a still existing adjustment in the retarded direction of the ignition angle (ZW) is reversed if the idling operating state is departed from.

## Revendications

1. Procédé de commande du régime d'un moteur à combustion interne après le démarrage jusqu'à ce que le régime de ralenti (nLL) soit atteint, dans lequel le régime (n) du moteur à combustion interne est détecté en permanence, le régime de ralenti (nLL) étant fonction de la température (KW) de l'eau de refroidissement, caractérisé en ce qu'il consiste à retarder, à partir d'un seuil de régime (nS) déterminé, l'angle de calage (ZW), en fonction de la vitesse de variation du régime (n), pendant un laps de temps (tS) déterminé et, ce laps de temps (tS) écoulé, à ramener, l'angle de calage (ZW) à l'angle de calage normal suivant une fonction prescrite.

2. Procédé suivant la revendication 1, caractérisé en ce qu'il est prévu une régulation du régime de ralenti, qui règle le régime (n) sur le régime de ralenti (nLL).

3. Procédé suivant la revendication 2, caractérisé en ce que le seuil (nS) de régime dépend du régime de ralenti (nLL).

4. Procédé suivant la revendication 2, caractérisé en ce que la fonction de retour à l'angle de calage normal est linéaire

5. Procédé suivant la revendication 2, caractérisé en ce que la fonction de retour à l'angle de calage normal est progressive.

6. Procédé suivant l'une des revendications précédentes, caractérisé en ce qu'il consiste à annuler unretard encore existant de l'angle de calage (ZW) est annulé, si l'on quitte l'état de fonctionnement de ralenti.
